# EUROPÄISCHE PATENTSCHRIFT

(11) **EP 3 338 907 B1**
(45) Veröffentlichungstag und Bekanntmachung des Hinweises auf die Patenterteilung: **18.11.2020**
(21) Anmeldenummer: 16205528.9
(22) Anmeldetag: 20.12.2016
(51) Int. Cl.: B21D 19/08, B21D 28/26, B23D 77/12

(54) **PRESSE ZUM UMFORMEN VON METALLBLECH**
PRESS FOR FORMING SHEET METAL
PRESSE DE TRANSFORMATION DE TÔLES MÉTALLIQUES

(43) Veröffentlichungstag der Anmeldung: 27.06.2018
(73) Patentinhaber: Autotech Engineering Deutschland GmbH, 33647 Bielefeld (DE)
(72) Erfinder: Dursun, Erkan, Darlington, DL3 8LQ (GB)
(74) Vertreter: Cohausz & Florack

(56) Entgegenhaltungen:
- FR-A1- 2 317 992
- FR-A1- 2 421 357
- GB-A- 2 363 348
- JP-A- S60 263 621
- US-A- 1 439 567
- US-A- 2 258 674
- US-A1- 2016 354 833

## Beschreibung

Die Erfindung betrifft eine Presse zum Umformen von Metallblech gemäß dem Oberbegriff des Anspruchs 1, mit einem Stanzwerkzeug zum Beschneiden oder Lochen des Metallblechs und einem Umformwerkzeug zum Umformen einer durch das Beschneiden oder Lochen erzeugten Schnittkante. Solch eine Presse ist aus der US 2016/354833 A1 bekannt.

Derartige Pressen, insbesondere in Form von Transferpressen, sind bekannt. Sie werden beispielsweise zur Herstellung von einschaligen Karosserie- und Fahrwerksbauteilen aus Stahlblech verwendet.

Bei Stahlblechen und auch anderen Metallblechen wird durch Scherschneidvorgänge das Formänderungsvermögen des betreffenden Bleches lokal reduziert, wodurch bei der Weiterverarbeitung des Bleches durch Umformen der Schnittkante die Gefahr eines Risses an der Schnittkante ansteigt. Reißt das Metallblech während der Umformung nahezu ausschließlich ausgehend von der Blechkante (Schnittkante), so wird das Metallblech als kantenrissempfindlich bezeichnet.

Zur Vermeidung von Rissbildungen bei Lochaufweitungen mittels Loch- und Durchzugsstempeln kann zwar die beim Durchzug zu erzielende Kragentiefe (Flanschlänge) relativ klein gewählt werden, jedoch würde dies insbesondere bei Fahrwerksbauteilen, wie etwa Querlenkern, zu ungenügenden Kragentiefen (Flanschlängen) beim Durchzug führen.

Eine mögliche Lösung, der Rissbildung bei der Kragen- oder Flanschbildung bzw. beim Umformen der Schnittkante entgegenzuwirken, besteht in einer maschinellen Nachbearbeitung, bei welcher die Schnittkante geglättet wird.

Einschalige Karosserie- und Fahrwerksbauteile aus Stahlblech, insbesondere Querlenker, werden üblicherweise in mehreren Operationen mittels einer Transferpresse gefertigt. Moderne Transferpressen erreichen eine Arbeitsgeschwindigkeit von über 25 Hüben/min und ermöglichen somit eine wirtschaftliche Fertigung von dreidimensional geformten Blechteilen. Zur Nachbearbeitung von rissempfindlichen Schnittkanten könnten die sich noch in der Fertigung befindlichen Werkstücke, z. B. Querlenker, nach der Operation "Vorlochen" oder "Kanten-Beschneiden" aus der Transferpresse ausgeschleust, anschließend die Schnittkanten mittels mechanischer Bearbeitung geglättet und schließlich die so bearbeiteten Werkstücke wieder der Transferpresse zur Operation "Kragen formen" bzw. "Flansch formen" zugeführt werden. Eine derartige Vorgehensweise wäre jedoch aus wirtschaftlicher Sicht unbefriedigend.

Der Erfindung liegt die Aufgabe zugrunde, eine Presse der eingangs genannten Art zu schaffen, mittels der sich dreidimensional geformte Blechbauteile, die eine zu einem Kragen oder Flansch umgeformte Schnittkante aufweisen, ohne Rissbildung bei der Kragen- oder Flanschbildung in wirtschaftlicher Weise herstellen lassen.

Diese Aufgabe wird bei einer Presse gemäß dem Anspruch 1 gelöst.

Bevorzugte und vorteilhafte Ausgestaltungen der erfindungsgemäßen Presse sind in den Unteransprüchen angegeben. Die erfindungsgemäße Presse ist vorzugsweise als Transferpresse - auch Mehrstufenpresse genannt - ausgeführt.

Die Erfindung basiert auf der Idee, in eine Presse der eingangs genannten Art eine Vorrichtung zur maschinellen Nachbearbeitung einer rissempfindlichen Schnittkante des umzuformenden Blechwerkstückes nach dem Arbeitsschritt "Beschneiden" bzw. "Lochen" zu integrieren. Hierdurch wird ein Ausschleusen des beschnittenen oder vorgelochten Blechwerkstückes zur Bearbeitung der rissempfindlichen Schnittkante und ein Wiedereinschleusen des kantenbearbeiteten Werkstückes in die Presse vermieden, so dass sich Blechformteile mit Lochkragen oder Kantenflansch ohne Rissbildung bei der Kragen- oder Flanschbildung in wirtschaftlicher Weise herstellen lassen. Dadurch, dass das integrierte Schnittkantenbearbeitungswerkzeug mittels eines Getriebes mit der Pressenhubbewegung der Presse gekoppelt ist, lässt sich die Pressenhubbewegung vorteilhaft zum Antrieb des Schnittkantenbearbeitungswerkzeuges nutzen. Die maschinelle Nachbearbeitung der Schnittkante des umzuformenden Blechwerkstückes durch Fräsen erfordert bei der erfindungsgemäßen Presse keine Verringerung der Arbeitsgeschwindigkeit der Presse. Die erfindungsgemäße Presse zeichnet sich somit durch eine hohe Leistung aus.

Eine vorteilhafte Ausgestaltung der Erfindung ist dadurch gekennzeichnet, dass das Schnittkantenbearbeitungswerkzeug dorn- oder zapfenförmig ausgebildet ist und ein frei vorstehendes Ende, einen sich in Richtung des freien Endes verjüngenden kegelförmigen Fräsabschnitt und einen sich an den größten Durchmesser des kegelförmigen Fräsabschnitts anschließenden, im Wesentlichen kreiszylindrischen Fräsabschnitt aufweist. Durch den kegelförmigen Fräsabschnitt lässt sich in zuverlässiger Weise insbesondere ein störungsfreies, zuverlässiges Einführen des Schnittkantenbearbeitungswerkzeuges in ein zuvor in der Presse durch Stanzen erzeugtes Loch sicherstellen. Zudem lässt sich mittels des rotierenden kegelförmigen Fräsabschnitts relativ schnell ausreichend viel Material von der Schnittkante (Lochkante) des Metallblechs spanend abtragen, so dass solches Material, welches aufgrund des zuvor durchgeführten Scherschneidvorgangs ein erheblich reduziertes Formänderungsvermögen besitzt und daher rissempfindlich ist, weitgehend oder vollständig von dem Metallblech entfernt wird. Es dürfte in den meisten Fällen ausreichen, wenn von der rissempfindlichen Schnittkante bis zu 0,8 mm bis 2 mm, z. B. ca. 1,5 mm abgetragen werden, bzw. dass der Durchmesser eines durch Stanzen (Vorlochen) erzeugten Lochs durch Fräsen um etwa 1,6 bis 4 mm, z.B. um ca. 3 mm erweitert wird. Das Abtragsmaß an der Schnittkante ist von der Blechdicke und dem Blechmaterial abhängig. Durch den sich an den kegelförmigen Fräsabschnitts anschließenden, im Wesentlichen kreiszylindrischen Fräsabschnitt wird eine optimale Oberflächengüte an der Schnittkante erzielt. Hierzu sollte der rotierende kreiszylindrische Fräsabschnitt möglichst lange mit der nachzubearbeitenden Schnittkante des Metallblechs in Kontakt bleiben.

Die Länge (d.h. die Höhe) und der Kegelwinkel des kegelförmigen Fräsabschnitts des Schnittkantenbearbeitungswerkzeuges hängen von der Hublänge der Presse sowie dem Abtragsmaß an der Schnittkante des zu bearbeitenden Metallblechs ab. Das Abtragsmaß an der Schnittkante ist, wie oben erwähnt, von der Blechdicke und dem Blechmaterial abhängig. Um bei üblichen Hublängen von Pressen zum Stanzen und Umformen von Stahlblech und bei typischen Dicken von Stahlblech zur Herstellung von Karosserie- oder Fahrwerksbauteilen ausreichend viel Material von der Schnittkante des Stahlblechs abzutragen, ohne die Taktzeit der Presse zu verlängern, sieht eine weitere Ausgestaltung der Erfindung vor, dass der kegelförmige Fräsabschnitt einen Kegelwinkel im Bereich von 1° bis 5°, vorzugsweise im Bereich von 1° bis 3° aufweist. Der Kegelwinkel wird bei einer typischen Pressengeschwindigkeit von beispielsweise ca. 25 Hüben/Minute vorzugsweise relativ klein gewählt.

Auch ist es in diesem Zusammenhang vorteilhaft, wenn nach einer weiteren Ausgestaltung der Erfindung die Differenz zwischen dem größten Durchmesser und dem kleinsten Durchmesser des kegelförmigen Fräsabschnitts im Bereich von 3 mm bis 12 mm, vorzugsweise im Bereich von 4 mm bis 10 mm liegt.

Das Schnittkantenbearbeitungswerkzeug ist derart ausgebildet, dass der spanende Materialabtrag an der Schnittkante hauptsächlich in horizontaler Richtung erfolgt. Das Schnittkantenbearbeitungswerkzeug unterscheidet sich somit von einem Kegelbohrer, bei dem der spanende Materialabtrag hauptsächlich in vertikaler Richtung erfolgt, und auch von einem Stirnfräser, dessen Fräsfläche nicht kegelförmig ausgebildet ist.

Hinsichtlich eines zuverlässigen Einführens des in der Presse integrierten Schnittkantenbearbeitungswerkzeuges in ein zuvor in der Presse durch Stanzen erzeugtes Loch sowie hinsichtlich eines ausreichend hohen Materialabtrages während der Pressenhubbewegung ist es vorteilhaft, wenn gemäß einer bevorzugten Ausgestaltung der Erfindung der kegelförmige Fräsabschnitt des Schnittkantenbearbeitungswerkzeuges eine axiale Länge aufweist, die mindestens doppelt so groß ist wie die axiale Länge des im Wesentlichen kreiszylindrischen Fräsabschnitts. Somit kann ein relativ langer Anteil der Taktzeit der Presse für den Materialabtrag genutzt werden.

Um eine ausreichend lange Einwirkzeit des im Wesentlichen kreiszylindrischen Fräsabschnitts des Schnittkantenbearbeitungswerkzeuges an der zu bearbeitenden bzw. zu glättenden Schnittkante während eines Pressenhubes sicherzustellen, ist nach einer weiteren bevorzugten Ausgestaltung der Erfindung vorgesehen, dass der kreiszylindrische Fräsabschnitt eine axiale Länge aufweist, die mindestens ein Viertel, vorzugsweise mindestens ein Drittel der axialen Länge des kegelförmigen Fräsabschnitts beträgt.

Um hinsichtlich der nachfolgenden Umformung eine optimale Güte der Schnittkante eines kantenrissempfindlichen Metallblechs zu erzielen, ist es ferner günstig, wenn der im Wesentlichen kreiszylindrische Fräsabschnitt des Schnittkantenbearbeitungswerkzeuges mit mehreren Schneiden oder Schneidkanten versehen ist. Vorzugsweise hat der kreiszylindrische Fräsabschnitt mehr Schneiden oder Schneidkanten als der kegelförmige Fräsabschnitt.

Eine weitere vorteilhafte Ausgestaltung der Erfindung ist dadurch gekennzeichnet, dass das Getriebe eine Getriebestufe aufweist, welche die Pressenhubbewegung, nämlich die Schließbewegung der Presse in eine Drehbewegung umwandelt und mit einer Freilaufkupplung versehen ist. Durch die Freilaufkupplung wird der Einfluss, der sich aus der sich während des Pressenhubes ändernden Geschwindigkeit des Pressenstößels ergibt, minimiert. Zudem wird durch die Freilaufkupplung ein negativer Einfluss, der sich aus dem Rückhub des Pressenstößels auf das Getriebe ergeben kann, vermieden. In diesem Zusammenhang sieht eine bevorzugte Ausgestaltung des Getriebes der erfindungsgemäßen Presse vor, dass die Getriebestufe, welche die Pressenhubbewegung in eine Drehbewegung umwandelt, eine Zahnstange, ein mit der Zahnstange kämmendes Ritzel, eine Welle und ein Zahnrad aufweist, wobei das Ritzel über die Freilaufkupplung mit dem Zahnrad gekoppelt ist.

Um während der jeweiligen Schließbewegung der Presse eine ausreichend hohe Fräsgeschwindigkeit zu erzielen, sieht eine bevorzugte Ausgestaltung der Erfindung vor, dass das Getriebe eine die Drehzahl der Drehbewegung erhöhende Getriebestufe aufweist, die mehrere Wellen mit Stirnrad-Ritzel-Paaren aufweist.

Des Weiteren ist bevorzugt, dass das Getriebe eine Getriebestufe zur Umwandlung der Drehung um eine horizontale Drehachse in eine Drehung um eine vertikale Drehachse aufweist. Somit kann die Pressenhubbewegung bzw. Schließbewegung der Presse, optimal in eine drehende Fräsbewegung umgewandelt werden. Dies kann beispielsweise dadurch erreicht werden, dass die besagte Getriebestufe ein Ritzel, eine horizontal gelagerte Welle und zwei miteinander kämmende Kegelzahnräder aufweist.

Nach einer weiteren vorteilhaften Ausgestaltung der Erfindung ist das Schnittkantenbearbeitungswerkzeug mittels eines Kegelrollenlagers gelagert. Hierdurch können die in Richtung der vertikalen Achse (Drehachse) des Schnittkantenbearbeitungswerkzeuges wirkenden Kräfte, welche beim Fräskontakt des kegelförmigen Fräsabschnitts des Schnittkantenbearbeitungswerkzeuges auftreten, kompensiert werden.

Zur Erzielung einer hohen Oberflächenqualität des umgeformten Metallblechs schlägt die Erfindung weiter vor, dass dem Schnittkantenbearbeitungswerkzeug eine Kühlmittelzufuhreinrichtung zugeordnet ist, mittels der durch das spanende Abtragen von Material an der Schnittkante anfallende Metallspäne und/oder anfallender Schleifabrieb von dem bearbeiteten Metallblech entfernbar sind. Hierdurch wird verhindert, dass Metallspäne und/oder Schleifabrieb beim Umformen des mit dem Schnittkantenbearbeitungswerkzeug spanend bearbeiteten Metallblechs in dessen Oberfläche gepresst werden.

In diesem Zusammenhang besteht eine vorteilhafte Weiterbildung darin, dass die Kühlmittelzufuhreinrichtung als Kreislaufsystem ausgeführt ist und einen Flüssigkeitssammelbehälter, eine Flüssigkeitspumpe, eine Flüssigkeitsleitung mit einer Auslassöffnung und eine Flüssigkeit-Feststoff-Abtrenneinrichtung, vorzugsweise in Form eines Siebes und/oder Filters, aufweist. Hierdurch können der Verbrauch und damit die Kosten für flüssiges Kühlmittel relativ gering gehalten werden.

Nachfolgend wir die Erfindung anhand einer mehrere Ausführungsbeispiele darstellenden Zeichnung näher erläutert. Es zeigen schematisch:
- Fig. 1: einen Abschnitt eines kantenrissempfindlichen Metallblechs, in das ein Loch gestanzt wurde, welches durch Umformen (Durchziehen) mit einem Kragen versehen werden soll, und ein Schnittkantenbearbeitungswerkzeug zum Abtragen von Material an der Schnittkante des Loches, in einer isometrischen Darstellung;
- Fig. 2: das Schnittkantenbearbeitungswerkzeug aus Fig. 1, das einen kegelförmigen Fräsabschnitt und einen kreiszylindrischen Fräsabschnitt aufweist, in einer Seitenansicht,
- Fig. 3: das Schnittkantenbearbeitungswerkzeug aus Fig. 1 in Eingriff mit einem vorgelochten Metallblech, in einer vertikalen Längsschnittansicht, und eine vergrößerte Detaildarstellung der Lochkante;
- Fig. 4 und 9: Diagramme, in denen jeweils die Geschwindigkeit des Pressenstößels relativ zu dessen Position dargestellt ist, wobei die gestrichelte Kurve die Geschwindigkeit des Pressenstößels und die durchgezogene Kurve die Position des Pressenstößels angeben;
- Fig. 5: einen Längenabschnitt des Schnittkantenbearbeitungswerkzeuges aus Fig. 1 in Eingriff mit einem vorgelochten Metallblech, zur Veranschaulichung verschiedener Parameter, welche die Länge vom ersten Kontakt bis zum oberen Ende des kegelförmigen Fräsabschnitts des Schnittkantenbearbeitungswerkzeuges beeinflussen;

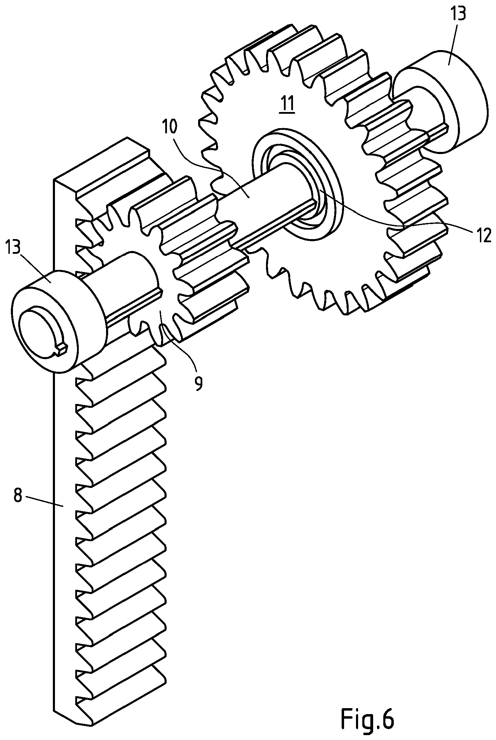

- Fig. 6: Komponenten einer ersten Getriebestufe eines Getriebes, das eine Pressenhubbewegung in eine Drehbewegung umwandelt, in einer isometrischen Darstellung;
- Fig. 7: eine Freilaufkupplung, in einer isometrischen Darstellung;
- Fig. 8a - 8e: ein Ausführungsbeispiel eines Getriebes, das eine Pressenhubbewegung in eine Drehbewegung umwandelt und zudem eine Drehzahlerhöhung bewirkt, in zwei unterschiedlichen Seitenansichten, einer Draufsicht sowie in zwei unterschiedlichen isometrischen Ansichten;
- Fig. 10a-10e: eine Presse zum Umformen von Metallblech, mit einem in der Presse integrierten Schnittkantenbearbeitungswerkzeug gemäß Fig. 1, in einer Seitenansicht zu verschiedenen Zeitpunkten der Pressenhubbewegung; und
- Fig. 10f: die Presse gemäß Fig. 10e mit einer Kühlmittelzufuhreinrichtung und einer Flüssigkeit-Feststoff-Abtrenneinrichtung.

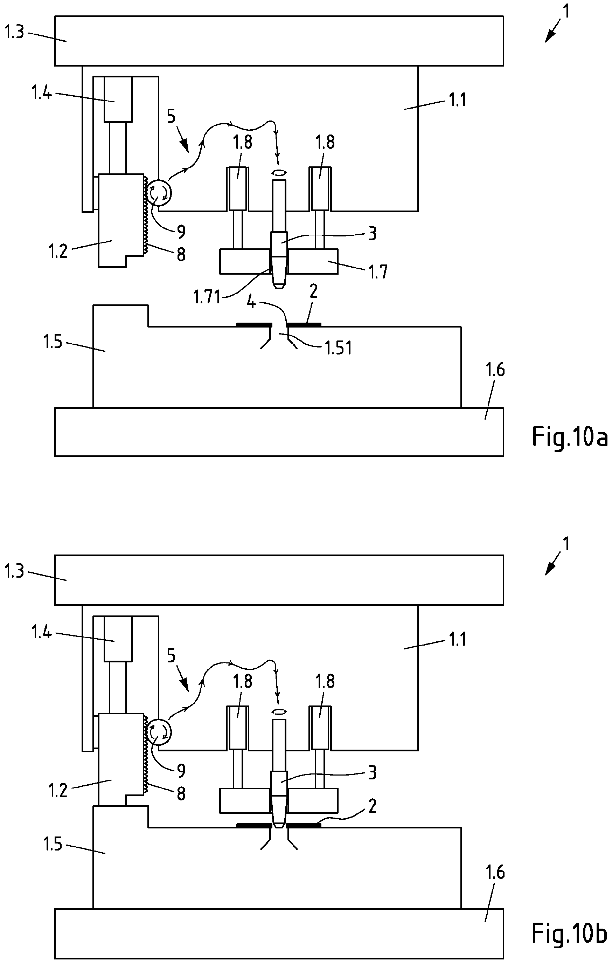

Die Figuren 10a bis 10f zeigen schematisch einen Abschnitt bzw. eine Arbeitsstufe einer Presse 1 zum Umformen von Metallblech 2, insbesondere Stahlblech. Bei der Presse 1 handelt es sich beispielsweise um eine Transferpresse (Mehrstufenpresse) zur Fertigung von dreidimensional geformten, einschaligen Karosserie- oder Fahrwerksbauteilen, zum Beispiel von einschaligen Querlenkern aus Stahlblech. Derartige Bauteile, insbesondere Querlenker, werden in mehreren Operationen (Stufen) mittels einer Transferpresse gefertigt, wobei in der Presse 1 unter anderem ein Vorlochen des Metallblechs 2 und/oder ein anderer Scherschneidvorgang an dem Metallblech 2 mittels eines Stanzwerkzeuges durchgeführt wird. Anschließend wird das Metallblech an 2 der Schnittkante 4 umgeformt, beispielsweise bei einer Lochaufweitung mittels eines Durchzugstempels, um an dem Loch 2.1 einen Kragen zu erzeugen, oder nach einem Beschneiden des Metallblechs 2, um an der Schnittkante einen Flansch zu formen.

Bei Metallblechen wird durch Schervorgänge das Formänderungsvermögen des Materials partiell reduziert, wodurch sich die Gefahr eines Risses im Weiterverarbeitungsprozess, insbesondere im nachfolgenden Umformprozess, an der Schnittkante ergeben kann. Um der Rissbildung bei der Flansch- bzw. Kragenbildung entgegenzuwirken, wird erfindungsgemäß die betreffende Schnittkante (Lochkante) innerhalb der Presse 1 vor dem Umformen geglättet, indem mittels mindestens eines in der Presse 1 integrierten rotierenden Schnittkantenbearbeitungswerkzeuges 3 Material an der Schnittkante 4 spanend abgetragen wird. Dieses Glätten bzw. spanende Bearbeiten der Schnittkante 4 ermöglicht eine erhebliche Steigerung des Umformgrades an der Schnittkante, da die Gefahr der Rissbildung im Schnittkantenbereich durch den Materialabtrag weitestgehend beseitigt wird. Somit können insbesondere größere Lochaufweitungen bzw. tiefere Durchzugskragen erzielt werden. Das rotierende Schnittkantenbearbeitungswerkzeug 3 kann auch als Fräser oder Fräswerkzeug bezeichnet werden.

Die in der Zeichnung dargestellten Ausführungsbeispiele beziehen sich hauptsächlich auf eine Lochaufweitung. Es ist allerdings anzumerken, dass sich die vorliegende Erfindung ebenso auf eine Vergrößerung einer anderen Metallblechkante, insbesondere einer Außenkonturkante (auch offene Schnittkante genannt) eines Metallblechs 2 übertragen lässt.

In die Transferpresse 1 ist ein zusätzlicher Arbeitsschritt "Schnittkantenbearbeitung mittels Fräser" nach dem Arbeitsschritt "Vorlochen" implementiert. Hierzu ist das rotierende Schnittkantenbearbeitungswerkzeug (Fräswerkzeug) 3 mittels eines Getriebes (Getriebezuges) 5 mit einer Pressenhubbewegung, nämlich der Schließbewegung der Presse 1 gekoppelt, wobei das Getriebe die Pressenhubbewegung in eine Drehbewegung umwandelt und eine Drehzahlerhöhung bewirkt. Das Schnittkantenbearbeitungswerkzeug (Fräswerkzeug) 3 arbeitet im Takt der Transferpresse 1.

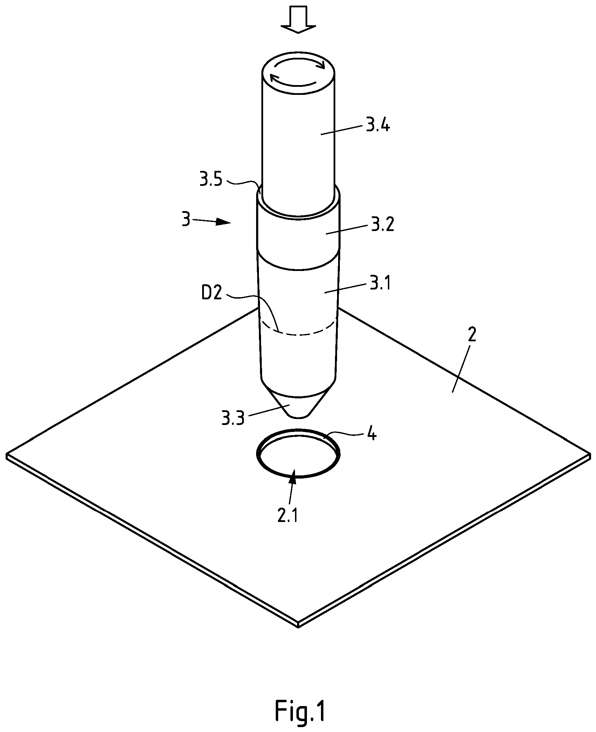

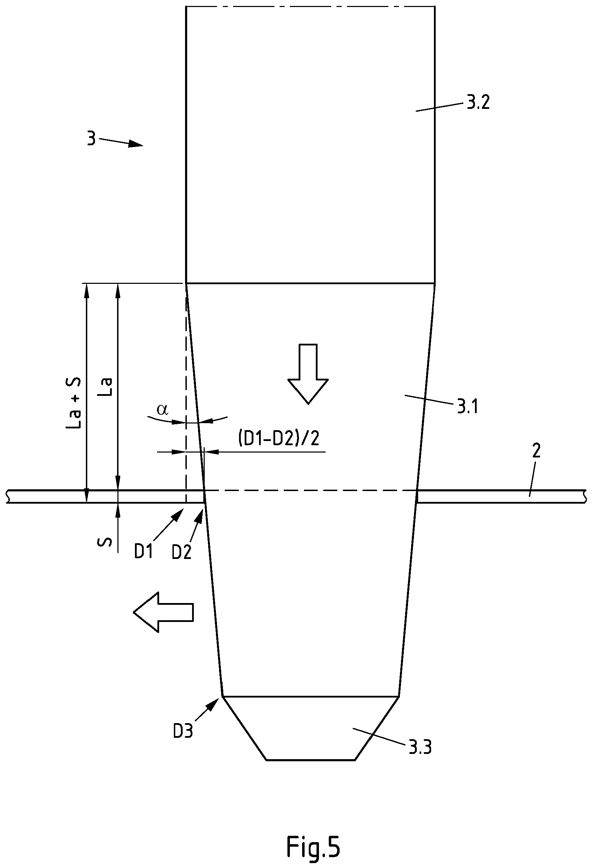

Wie insbesondere in den Figuren 1, 2 und 5 zu erkennen ist, ist das Schnittkantenbearbeitungswerkzeug 3 dorn- oder zapfenförmig ausgebildet. Es weist ein frei vorstehendes Ende, einen sich in Richtung des freien Endes verjüngenden kegelförmigen Fräsabschnitt 3.1 und einen sich an den größten Durchmesser des kegelförmigen Fräsabschnitts 3.1 anschließenden im Wesentlichen kreiszylindrischen Fräsabschnitt 3.2 auf. Am frei vorstehenden Ende ist vorzugsweise eine Einführspitze 3.3 ausgebildet, an die sich der kegelförmige Fräsabschnitt 3.1 anschließt. Die Einführspitze 3.3 kann kegelstumpfförmig ausgebildet sein und beispielsweise einen Kegelwinkel im Bereich von 20° bis 60°, insbesondere von 30° bis 50° aufweisen. Der kegelförmige Fräsabschnitt 3.1 hat dagegen einen relativ geringen Kegelwinkel a, der beispielsweise im Bereich von 1° bis 5°, vorzugsweise im Bereich von 1° bis 3° liegt.

Die Differenz zwischen dem größten Durchmesser D1 und dem kleinsten Durchmesser D3 des kegelförmigen Fräsabschnitts 3.1 hängt insbesondere von der Dicke S des Metallblechs 2 bzw. dem Maß des gewünschten Materialabtrags (D1 - D2) ab. Sie kann beispielsweise im Bereich von 3 bis 12 mm, insbesondere im Bereich von 4 bis 10 mm liegen. Vorzugsweise beträgt die Differenz zwischen dem größten Durchmesser D1 und dem kleinsten Durchmesser D3 des kegelförmigen Fräsabschnitts 3.1 bis zu etwa das 2-fache der Dicke S des Metallblechs 2. Die Dicke S des Metallblechs 2 kann beispielsweise im Bereich von 2 mm bis 6 mm liegen.

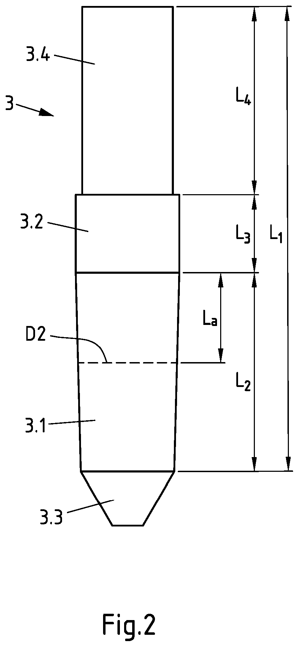

Weiter ist der kegelförmige Fräsabschnitt 3.1 so bemessen, dass er beim Eindringen in das Loch 2.1, dessen Schnittkante 4 um einen bestimmtes Maß abgefräst werden soll, nicht unmittelbar nach Eindringen der Einführspitze 3.3 mit der Schnittkante (Lochkante) 4 in Kontakt kommt bzw. Material von der Schnittkante 4 abträgt. Vielmehr liegt die erste Kontaktlinie D2, in den Fig. 1, 2 und 5 gestrichelt dargestellt, in einem Bereich nahe der halben Höhe des kegelförmigen Fräsabschnitts 3.1, der eine Axiallänge L2 aufweist. Der Abstand der ersten Kontaktlinie D2 von dem größten Durchmesser D1 des kegelförmigen Fräsabschnitts 3.1 ist in Fig. 2 mit La bezeichnet. L1 bezeichnet die Axiallänge des Schnittkantenbearbeitungswerkzeuges 3 (ohne die Einführspitze 3.3, die keinen nennenswerten Einfluss auf den Fräsvorgang hat). L3 bezeichnet die Axiallänge des im Wesentlichen kreiszylindrischen Fräsabschnitts 3.2; und L4 bezeichnet die Axiallänge des Lagerschaftes 3.4 des Fräswerkzeuges 3. Der Lagerschaft 3.4 weist einen deutlich geringeren Durchmesser als der kreiszylindrische Fräsabschnitt 3.2 auf, so dass der Lagerschaft 3.4 und der kreiszylindrische Fräsabschnitt 3.2 einen umlaufenden Absatz 3.5 definieren.

Um eine besonders gute Glättung der Schnittkante 4 bzw. eine besonders hohe Güte der Lochkante 4 zu erzielen, sollte der kreiszylindrische Fräsabschnitt 3.2 möglichst lange mit der Schnittkante 4 in Fräskontakt sein. Die Axiallänge L3 des kreiszylindrischen Fräsabschnitts 3.2 beträgt daher vorzugsweise mindestens das 5-fache der Dicke S des zu bearbeitenden Metallblechs 2. Ferner weist der kreiszylindrische Fräsabschnitt 3.2 vorzugsweise mehr Schneiden oder Schneidkanten auf als der kegelförmige Fräsabschnitt 3.1.

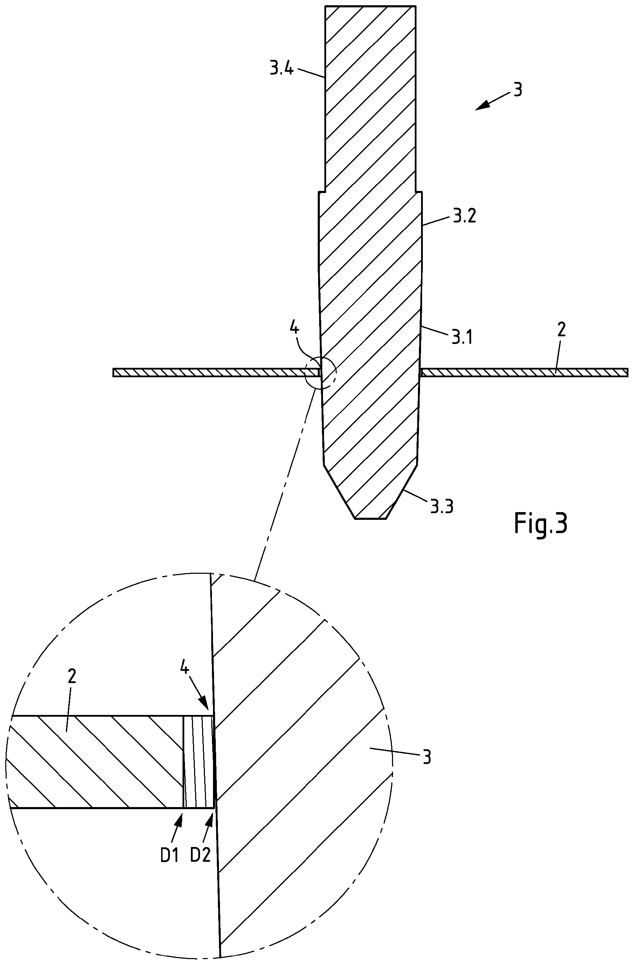

In Fig. 3 ist zu erkennen, dass das Schnittkantenbearbeitungswerkzeug 3 derart ausgebildet ist, dass der spanende Materialabtrag an der Lochkante bzw. Schnittkante 4 hauptsächlich in horizontaler Richtung erfolgt.

Das Schnittkantenbearbeitungswerkzeug 3 ist um eine im Wesentlichen vertikale Achse drehbar an dem Oberwerkzeug 1.1 der Presse 1 gelagert. Hierzu ist der Lagerschaft 3.4 in einem oder mehreren mit dem Oberwerkzeug 1.1 verbundenen Drehlagern 6, vorzugsweise Wälzlagern, kraftschlüssig gehalten. Des Weiteren ist auf dem Lagerschaft 3.4 zwischen dem kreiszylindrischen Fräsabschnitt 3.2 und den Drehlagern 6 ein Kegelrollenlager 7 angeordnet, das ebenfalls in dem Oberwerkzeug 1.1 gehalten ist. Das Kegelrollenlager 7 kompensiert die auf die vertikale Achse des Fräswerkzeugs 3 einwirkenden Kräfte, die durch den kegelförmigen Fräsabschnitt 3.1 erzeugt werden.

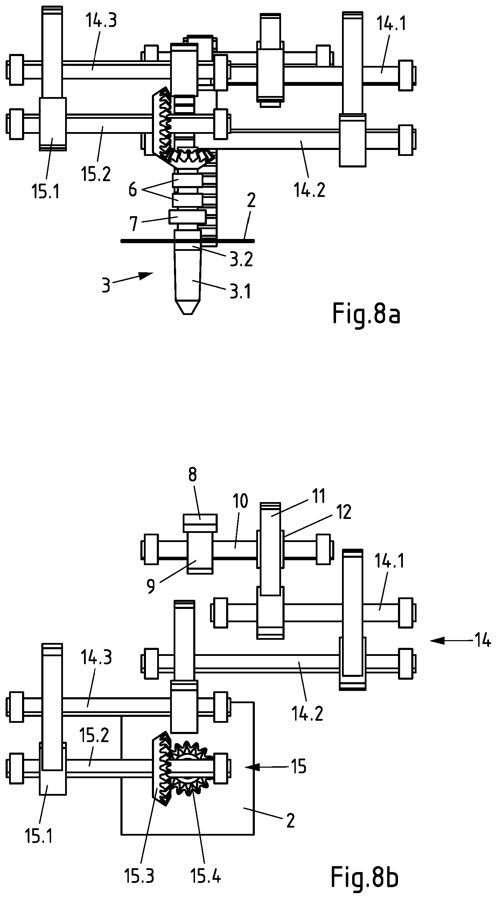

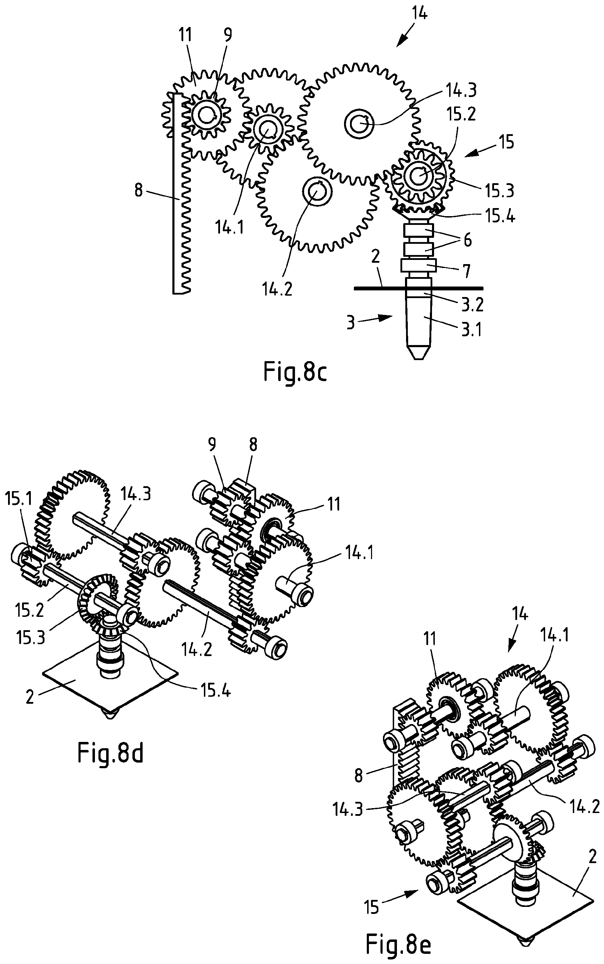

Das Getriebe 5, mittels dem das Fräswerkzeug 3 mit einer Pressenhubbewegung bzw. der Schließbewegung der Presse 1 gekoppelt ist, weist eine erste Getriebestufe auf, die eine Zahnstange 8, ein mit der Zahnstange 8 kämmendes Ritzel 9, eine Welle 10 und ein Zahnrad 11 aufweist, wobei das Ritzel 9 bzw. die Welle 10 über eine Freilaufkupplung 12 mit dem Zahnrad 11 gekoppelt ist (vgl. Figuren 2, 7 und 8). Die Zahnstange 8 ist an einer oberen Halterung 12, die fest mit dem Oberwerkzeug 1.1 bzw. dem Pressenstößel 1.3 der Presse 1 verbunden ist, seitlich befestigt. Die Zahnstange 8 erstreckt sich vertikal. Zwischen der oberen Halterung 1.2 und dem Oberwerkzeug 1.1 bzw. dem Pressenstößel 1.3 ist eine Druckfeder 1.4 angeordnet, die beim Schließen der Presse 1, wenn die obere Halterung 1.2 gegen das Unterwerkzeug 1.5 gefahren wird, komprimiert wird. Das Unterwerkzeug 1.5 ist auf einem Bodenpolster (Pressenrahmen) 1.6 montiert.

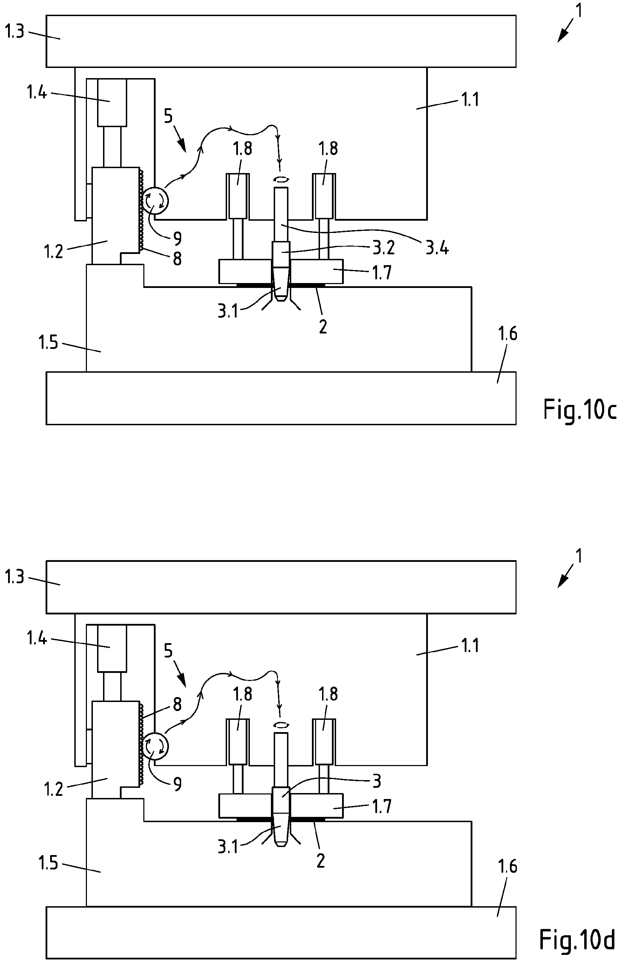

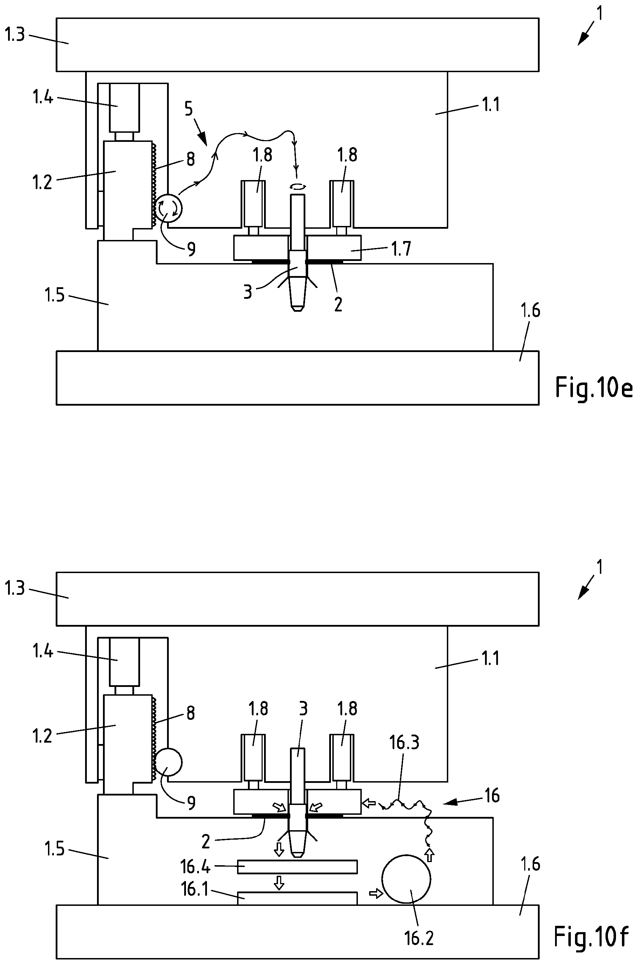

In den Figuren 10 sind die Zahnstange 8 und das Ritzel 9 des Getriebes 5 zu erkennen. Die übrigen Komponenten des Getriebes (Getriebezuges) 5 sind durch eine Pfeillinie lediglich angedeutet. Das Ritzel 9 der ersten Getriebestufe ist drehbar mit dem relativ zu dem Unterwerkzeug 1.5 heb- und senkbaren Oberwerkzeug 1.1 verbunden. Die das Ritzel 9 tragende Welle 10 ist hierzu mittels Drehlagern 13 im Oberwerkzeug 1.1 drehbar gehalten.

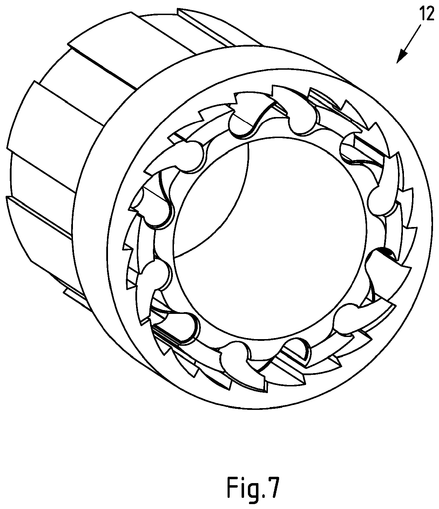

Die Drehbewegung der Welle 10 wird über die Freilaufkupplung 12 auf das Zahnrad 11 übertragen, das mit einer Stirnradgetriebestufe 14 in Eingriff steht. Die Freilaufkupplung 12 lässt eine Drehmomentübertragung nur in einer Drehrichtung zu. Die Freilaufkupplung 12 kann beispielsweise in Form eines Sperrklingenlagers ausgebildet sein (siehe Fig. 7). Die auf die Freilaufkupplung 12 folgende Stirnradgetriebestufe 14 dient der Erhöhung der Drehzahl und weist hierzu mehrere Wellen 14.1, 14.2, 14.3 mit Stirnrad-Ritzel-Paaren auf. An die Stirnradgetriebestufe 14 schließt sich eine Getriebestufe 15 an, mittels der die Drehung um eine horizontale Drehachse in eine Drehung um eine vertikale Drehachse umgewandelt wird. Die letztgenannte Getriebestufe 15 weist ein Ritzel 15.1, eine horizontal gelagerte Welle 15.2 und zwei miteinander kämmende Kegelzahnräder 15.3, 15.4 auf, wobei eines (15.4) der beiden Kegelzahnräder 15.3, 15.4 drehfest mit dem Lagerschaft 3.4 des Fräswerkzeuges 3 verbunden ist.

An dem Oberwerkzeug 1.1 der Transferpresse 1 ist ferner ein Niederhalter 1.7 gehalten, der sich über Druckfedern 1.8 an dem Oberwerkzeug 1.1 abstützen kann und das Metallblech (Werkstück) 2 beim Schließen der Presse 1 gegen das Unterwerkzeug 1.5 drückt. In dem Niederhalter 1.7 sowie in dem Unterwerkzeug 1.5 sind Aussparungen bzw. Ausnehmungen 1.71, 1.51 ausgebildet, die der Aufnahme des Fräswerkzeugs 3 dienen und ein Einführen des Fräswerkzeugs 3 in das Unterwerkzeug 1.5 erlauben. Der Niederhalter 1.7 dient dazu, das Werkstück 2 durch Einspannen zu stabilisieren, bevor der Fräsvorgang beginnt. Die dem Niederhalter 1.7 zugeordneten Druckfedern 1.8 sorgen für einen ausreichenden Einspanndruck, um das Metallblech (Werkstück) 2 während des Fräsvorgangs (Materialabtrags) zu fixieren.

Beim Schließen und Öffnen der Presse 1 dreht sich das am Oberwerkzeug 1.1 gelagerte Ritzel 9 entlang der Zahnstange 8. Die Pressengeschwindigkeit und damit die Drehzahl des mit der Pressenhubbewegung gekoppelten Fräswerkzeuges 3 sind am unteren Totpunkt sowie am oberen Totpunkt des Pressenstößels 1.3 jeweils null. Der Materialabtrag an der Schnittkante (Lochkante) 4 des Werkstückes 2 kann im Wesentlichen nur während der Schließbewegung erfolgen. Dementsprechend überträgt die Freilaufkupplung 12 auch nur beim Schließen der Presse 1 ein Drehmoment auf das Fräswerkzeug 3.

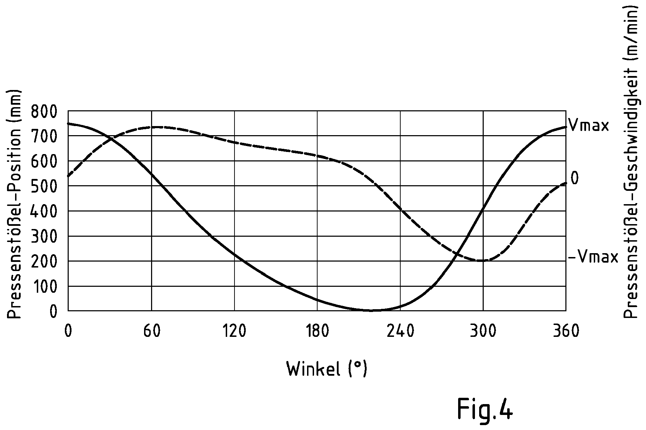

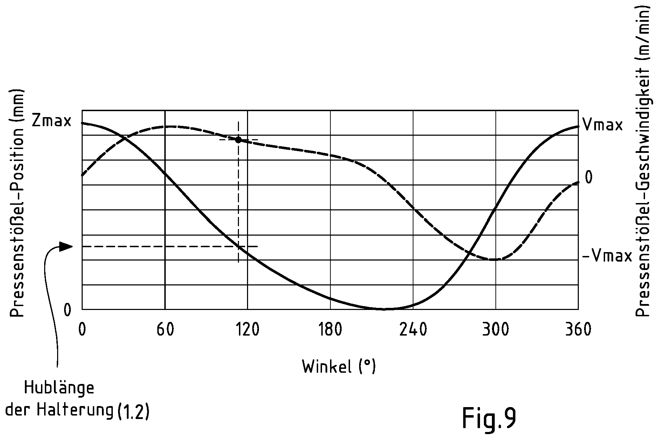

Die Figuren 4 und 9 zeigen Diagramme, in denen jeweils die Geschwindigkeit des Pressenstößels 1.3 relativ zu dessen Position beispielhaft dargestellt ist, wobei die gestrichelte Kurve die Geschwindigkeit des Pressenstößels 1.3 wiedergibt, während die durchgezogene Kurve die Position des Pressenstößels 1.3 angibt. Es ist zu erkennen, dass sich nicht nur die Bewegungsrichtung sondern auch die Geschwindigkeit des Pressenstößels 1.3 während des Arbeitstaktes der Presse 1 ändert. Der Fräsvorgang an der Schnittkante (Lochkante) 4 des Werkstückes 2 sollte allerdings erst erfolgen, wenn das Werkstück 2 mittels des Niederhalters 1.7 stabil eingespannt ist. Somit steht für den Fräsvorgang nur ein begrenztes Zeitfenster während des Schließens der Presse 1 zur Verfügung. Um in dem begrenzten Zeitfenster einen ausreichenden Materialabtrag zu erreichen, muss das Getriebe 5 ein entsprechend hohes Übersetzungsverhältnis aufweisen. Ein Übersetzungsverhältnis im Bereich von 1:6 bis 1:18, insbesondere im Bereich von 1:9 bis 1:18, wird als zweckmäßig erachtet.

Es versteht sich, dass die Diagramme in den Figuren 4 und 9 lediglich ein Beispiel darstellen. Jede Presse, insbesondere jede Transferpresse, hat ihre eigenen Pressenstößel-Positions- bzw. Pressenstößel-Geschwindigkeitskurven.

Wie in Fig. 10f skizziert ist, besteht eine weitere Ausgestaltung der Transferpresse 1 darin, dass dem Fräswerkzeug 3 eine Kühlmittelzufuhreinrichtung 16 zugeordnet ist, mittels der durch das spanende Abtragen von Material an der Schnittkante 4 anfallende Metallspäne und/oder anfallender Schleifabrieb von dem bearbeiteten Metallblech 2 entfernt werden. Die Kühlmittelzufuhreinrichtung 16 ist dabei als Kreislaufsystem ausgeführt. Sie umfasst einen Flüssigkeitssammelbehälter 16.1, eine Flüssigkeitspumpe 16.2, eine Flüssigkeitsleitung 16.3 mit einer Auslassöffnung und eine Flüssigkeit-Feststoff-Abtrenneinrichtung 16.4, beispielsweise in Form eines Siebes und/oder Filters.

## Patentansprüche

1. Presse (1) zum Umformen von Metallblech (2), mit einem Stanzwerkzeug zum Beschneiden oder Lochen des Metallblechs (2) und einem Umformwerkzeug zum Umformen einer durch das Beschneiden oder Lochen erzeugten Schnittkante (4), **dadurch gekennzeichnet, dass** in der Presse (1) zwischen dem Stanzwerkzeug und dem Umformwerkzeug ein rotierendes Schnittkantenbearbeitungswerkzeug (3) zum spanenden Abtragen von Material an der umzuformenden Schnittkante (4) integriert ist, wobei das Schnittkantenbearbeitungswerkzeug (3) mittels eines Getriebes (5) mit einer Pressenhubbewegung der Presse (1) gekoppelt ist, und wobei das Getriebe (5) die Pressenhubbewegung in eine Drehbewegung umwandelt und eine Drehzahlerhöhung bewirkt.

2. Presse nach Anspruch 1, **dadurch gekennzeichnet, dass** das Schnittkantenbearbeitungswerkzeug (3) dorn- oder zapfenförmig ausgebildet ist und ein frei vorstehendes Ende, einen sich in Richtung des freien Endes verjüngenden kegelförmigen Fräsabschnitt (3.1) und einen sich an den größten Durchmesser (D1) des kegelförmigen Fräsabschnitts (3.1) anschließenden im Wesentlichen kreiszylindrischen Fräsabschnitt (3.2) aufweist.

3. Presse nach Anspruch 2, **dadurch gekennzeichnet, dass** der kegelförmige Fräsabschnitt (3.1) einen Kegelwinkel (a) im Bereich von 1° bis 5°, vorzugsweise im Bereich von 1° bis 3° aufweist.

4. Presse nach Anspruch 2 oder 3, **dadurch gekennzeichnet, dass** die Differenz zwischen dem größten Durchmesser (D1) und dem kleinsten Durchmesser (D3) des kegelförmigen Fräsabschnitts (3.1) im Bereich von 3 mm bis 12 mm, vorzugsweise im Bereich von 4 mm bis 10 mm liegt.

5. Presse nach einem der Ansprüche 2 bis 4, **dadurch gekennzeichnet, dass** der kegelförmige Fräsabschnitt (3.1) eine axiale Länge (L2) aufweist, die mindestens doppelt so groß ist wie die axiale Länge (L3) des im Wesentlichen kreiszylindrischen Fräsabschnitts (3.2).

6. Presse nach einem der Ansprüche 2 bis 5, **dadurch gekennzeichnet, dass** der im Wesentlichen kreiszylindrische Fräsabschnitt (3.2) eine axiale Länge (L3) aufweist, die mindestens ein Viertel, vorzugsweise mindestens ein Drittel der axialen Länge (L2) des kegelförmigen Fräsabschnitts (3.1) beträgt.

7. Presse nach einem der Ansprüche 2 bis 6, **dadurch gekennzeichnet, dass** der im Wesentlichen kreiszylindrische Fräsabschnitt (3.2) mit mehreren Schneiden oder Schneidkanten versehen ist.

8. Presse nach einem der Ansprüche 1 bis 7, **dadurch gekennzeichnet, dass** das Getriebe (5) eine die Pressenhubbewegung in eine Drehbewegung umwandelnde Getriebestufe aufweist, die mit einer Freilaufkupplung (12) versehen ist.

9. Presse nach Anspruch 8, **dadurch gekennzeichnet, dass** die die Pressenhubbewegung in eine Drehbewegung umwandelnde Getriebestufe eine Zahnstange (8), ein mit der Zahnstange (8) kämmendes Ritzel (9), eine Welle (10) und ein Zahnrad (11) aufweist, wobei das Ritzel (9) über die Freilaufkupplung (12) mit dem Zahnrad (11) gekoppelt ist.

10. Presse nach einem der Ansprüche 1 bis 9, **dadurch gekennzeichnet, dass** das Getriebe (5) eine die Drehzahl der Drehbewegung erhöhende Getriebestufe (14) aufweist, die mehrere Wellen (14.1, 14.2, 14.3) mit Stirnrad-Ritzel-Paaren aufweist.

11. Presse nach einem der Ansprüche 1 bis 10, **dadurch gekennzeichnet, dass** das Getriebe (5) eine Getriebestufe (15) zur Umwandlung der Drehung um eine horizontale Drehachse in eine Drehung um eine vertikale Drehachse aufweist.

12. Presse nach Anspruch 11, **dadurch gekennzeichnet, dass** die Getriebestufe (15) zur Umwandlung der Drehung um eine horizontale Drehachse in eine Drehung um eine vertikale Drehachse ein Ritzel (15.1), eine horizontal gelagerte Welle (15.2) und zwei miteinander kämmende Kegelzahnräder (15.3, 15.4) aufweist.

13. Presse nach einem der Ansprüche 1 bis 12, **dadurch gekennzeichnet, dass** das Schnittkantenbearbeitungswerkzeug (3) mittels eines Kegelrollenlagers (7) gelagert ist.

14. Presse nach einem der Ansprüche 1 bis 13, **dadurch gekennzeichnet, dass** dem Schnittkantenbearbeitungswerkzeug (3) eine Kühlmittelzufuhreinrichtung (16) zugeordnet ist, mittels der durch das spanende Abtragen von Material an der Schnittkante (4) anfallende Metallspäne und/oder anfallender Schleifabrieb von dem bearbeiteten Metallblech (2) entfernbar sind.

15. Presse nach Anspruch 14, **dadurch gekennzeichnet, dass** die Kühlmittelzufuhreinrichtung (16) als Kreislaufsystem ausgeführt ist und einen Flüssigkeitssammelbehälter (16.1), eine Flüssigkeitspumpe (16.2), eine Flüssigkeitsleitung (16.3) mit einer Auslassöffnung und eine Flüssigkeit-Feststoff-Abtrenneinrichtung (16.4), vorzugsweise in Form eines Siebes und/oder Filters, aufweist.

## Claims

1. Press (1) for forming sheet metal (2), having a punching tool for trimming or piercing the sheet metal (2) and a forming tool for forming a cutting edge (4) produced by the trimming or piercing, **characterized in that** a rotating cutting edge processing tool (3) for removing material by cutting at the cutting edge (4) to be formed is integrated in the press (1) between the punching tool and the forming tool, wherein the cutting edge processing tool (3) is coupled to a press stroke movement of the press (1) by means of a transmission (5), and wherein the transmission (5) converts the press stroke movement into a rotary movement and causes an increase in rotational speed.

2. Press according to claim 1, **characterized in that** the cutting edge processing tool (3) is designed in the shape of a mandrel or pin and has a freely projecting end, a conical milling section (3.1) tapering in the direction of the free end and a substantially circular cylindrical milling section (3.2) adjoining the largest diameter (D1) of the conical milling section (3.1).

3. Press according to claim 2, **characterized in that** the conical milling section (3.1) has a cone angle (α) in the range of 1° to 5°, preferably in the range of 1° to 3°.

4. Press according to claim 2 or 3, **characterized in that** the difference between the largest diameter (D1) and the smallest diameter (D3) of the conical milling section (3.1) is in the range of 3 mm to 12 mm, preferably in the range of 4 mm to 10 mm.

5. Press according to any one of claims 2 to 4, **characterized in that** the conical milling section (3.1) has an axial length (L2) which is at least twice the axial length (L3) of the substantially circular cylindrical milling section (3.2).

6. Press according to any one of claims 2 to 5, **characterized in that** the substantially circular cylindrical milling section (3.2) has an axial length (L3) which is at least one quarter, preferably at least one third of the axial length (L2) of the conical milling section (3.1).

7. Press according to any one of claims 2 to 6, **characterized in that** the substantially circular cylindrical milling section (3.2) is provided with several cutting edges or cutting edges.

8. Press according to any one of the claims 1 to 7, **characterized in that** the transmission (5) comprises a gear stage converting the press stroke movement into a rotary movement, which is provided with a freewheel clutch (12).

9. Press according to claim 8, **characterized in that** the gear stage converting the press stroke movement into a rotary movement comprises a rack (8), a pinion (9) meshing with the rack (8), a shaft (10) and a gear wheel (11), the pinion (9) being coupled to the gear wheel (11) via the freewheel clutch (12).

10. Press according to any one of claims 1 to 9, **characterized in that** the transmission (5) has a gear stage (14) increasing the rotational speed of the rotary movement, which has several shafts (14.1, 14.2, 14.3) with spur wheel-pinion pairs.

11. Press according to any one of claims 1 to 10, **characterized in that** the transmission (5) comprises a gear stage (15) for converting the rotation about a horizontal axis of rotation into a rotation about a vertical axis of rotation.

12. Press according to claim 11, **characterized in that** the gear stage (15) for converting the rotation about a horizontal axis of rotation into a rotation about a vertical axis of rotation comprises a pinion (15.1), a horizontally mounted shaft (15.2) and two meshing bevel gearwheels (15.3, 15.4).

13. Press according to any one of claims 1 to 12, **characterized in that** the cutting edge processing tool (3) is supported by means of a taper roller bearing (7).

14. Press according to any one of the claims 1 to 13, **characterized in that** a coolant supply device (16) is associated with the cutting edge processing tool (3), by means of which metal chips and/or grinding abrasion occurring at the cutting edge (4) due to the cutting removal of material can be removed from the processed sheet metal (2).

15. Press according to claim 14, **characterised in that** the coolant supply device (16) is designed as a circulation system and comprises a liquid collecting container (16.1), a liquid pump (16.2), a liquid line (16.3) with an outlet opening and a liquid-solid separation device (16.4), preferably in the form of a sieve and/or filter.

## Revendications

1. Presse (1) pour la transformation de tôle métallique (2), avec un outil d'estampage, destiné à découper ou à perforer une tôle métallique (2) et un outil de formage, destiné à former un bord de coupe (4) provenant de la découpe ou de la perforation,
**caractérisée en ce que**, dans la presse (1), entre l'outil d'estampage et l'outil de formage, un outil de traitement de bord de coupe (3) rotatif est intégré pour l'enlèvement de copeaux de matériau sur le bord de coupe (4) à former, sachant que l'outil de traitement de bord de coupe (3) est couplé avec un coup de presse de la presse (1) au moyen d'une transmission (5) et sachant que la transmission (5) transforme le coup de presse en un mouvement de rotation et provoque une augmentation de la vitesse de rotation.

2. Presse selon la revendication 1,
**caractérisée en ce que**, l'outil de traitement de bord de coupe (3) est réalisé en forme de mandrin ou pointe et est doté d'une extrémité en saillie libre, d'une partie de fraisage (3.1), qui s'amincit en forme de cône en direction de l'extrémité libre, et d'une partie de fraisage (3.2) sensiblement cylindrique, circulaire, qui se raccorde au plus grand diamètre (D1) de la partie de fraisage (3.1) en forme de cône.

3. Presse selon la revendication 2,
**caractérisée en ce que** la partie de fraisage (3.1) en forme de cône est dotée d'un angle de cône (a) situé dans une gamme de 1° à 5°, de préférence dans une gamme de 1° à 3°.

4. Presse selon revendication 2 ou 3,
**caractérisée en ce que** la différence entre le plus grand diamètre (D1) et le plus petit diamètre (D3) de la partie de fraisage (3.1) en forme de cône est située dans une gamme de 3 mm à 12 mm, de préférence dans une gamme de 4 mm à 10 mm.

5. Presse selon l'une des revendications 2 à 4,
**caractérisée en ce que** la partie de fraisage (3.1) en forme de cône est dotée d'une longueur axiale (L2), qui est au moins deux fois plus grande que la longueur axiale (L3) de la partie de fraisage (3.2) sensiblement cylindrique circulaire.

6. Presse selon l'une des revendications 2 à 5,
**caractérisée en ce que** la partie de fraisage (3.2) sensiblement cylindrique circulaire est dotée d'une longueur axiale (L3), qui est d'au moins un quart, de préférence d'au moins un tiers de la longueur axiale (L2) de la partie de fraisage (3.1) en forme de cône.

7. Presse selon l'une des revendications 2 à 6,
**caractérisée en ce que** la partie de fraisage (3.2) sensiblement cylindrique circulaire est dotée de plusieurs dispositifs de coupe ou d'arrêtés de coupe.

8. Pressé l'une des revendications 1 à 7,
**caractérisée en ce que** la transmission (5) est doté d'un étage de transmission, qui, transformant le coup de presse en un mouvement de rotation, est pourvu d'un embrayage à roue libre (12) .

9. Presse selon la revendication 8,
**caractérisée en ce que** l'étage de transmission, qui transforme le coup de presse en un mouvement de rotation, est doté d'une barre dentée (8), d'un pignon d'engrènement (9), d'un arbre (10) et d'une roue dentée (11), sachant que le pignon (9) est couplé avec la roue dentée (11) par le biais de l'embrayage à roue libre (12).

10. Presse selon l'une des revendications 1 à 9,
**caractérisée en ce que** la transmission (5) est doté d'un étage d'engrenage (14), qui, transformant le coup de presse en un mouvement de rotation, est pourvu de plusieurs arbres (14.1, 14.2, 14.3) qui sont dotés de couples roue dentée droite-pignon.

11. Presse selon l'une des revendications 1 à 10,
**caractérisée en ce que** la transmission (5) est doté d'un étage d'engrenage (15) qui est destiné à transformer la rotation autour d'un axe de rotation horizontal en une rotation autour d'un axe de rotation vertical.

12. Presse selon la revendication 11,
**caractérisée en ce que** l'étage de transmission (15), destiné à transformer la rotation autour d'un axe de rotation horizontal en une rotation autour d'un axe de rotation vertical, est doté d'un pignon (15.1), d'un arbre (15.2), monté horizontalement, et de deux roues dentées coniques (15.3, 15.4) qui s'engrènent ensemble.

13. Presse selon l'une des revendications 1 à 12,
**caractérisée en ce que** l'outil de traitement de bord de coupe (3) est monté au moyen d'un palier à rouleaux coniques (7).

14. Presse selon l'une des revendications 1 à 13,
**caractérisée en ce qu'**un dispositif d'alimentation en réfrigérant (16), au moyen duquel les copeaux métalliques, résultant de l'usinage du bord de coupe (4), et/ou les résidus, résultant de l'abrasion de la tôle métallique (2) traitée, peuvent être éliminés, est associé à l'outil de traitement de bord de coupe (3).

15. Presse selon la revendication 14,
**caractérisée en ce que** le dispositif d'alimentation en réfrigérant (16) est réalisé en forme de système à circuit et est doté d'un conteneur collecteur de liquide (16.1), d'une pompe de liquide (16.2), d'une conduite de liquide (16.3) avec une ouverture de sortie et d'une installation de séparation de liquide - matières solides (16.4), présentant de préférence la forme d'un tamis et/ou d'un filtre.
